Europäisches Patentamt

European Patent Office

Office européen des brevets

(11) Numéro de publication : **0 346 190 B1**

(12) **FASCICULE DE BREVET EUROPEEN**

(45) Date de publication du fascicule du brevet :
**29.07.92 Bulletin 92/31**

(21) Numéro de dépôt : **89401516.3**

(22) Date de dépôt : **02.06.89**

(51) Int. Cl.⁵ : **B60R 19/18**

(54) **Dispositif de fixation pour pare-chocs de véhicules automobiles.**

(30) Priorité : **10.06.88 FR 8807751**

(43) Date de publication de la demande :
**13.12.89 Bulletin 89/50**

(45) Mention de la délivrance du brevet :
**29.07.92 Bulletin 92/31**

(84) Etats contractants désignés :
**BE DE ES GB IT**

(56) Documents cités :
**FR-A- 2 435 373**
**FR-A- 2 534 847**

(56) Documents cités :
**PATENT ABSTRACTS OF JAPAN, vol. 11, no.
105 (M-577)[2552], 3 avril 1987, page 133 M
577; & JP-A-61 253 245 (NISSAN MOTORCO.
LTD) 11-11-1986
PATENT ABSTRACTS OF JAPAN, vol. 4, no. 94
(M-19)[576], 8 juillet 1980, page 80 M 19; &
JP-A-55 51 639 (NISSAN JIDOSHAK.K.) 15-
04-1980**

(73) Titulaire : **REGIE NATIONALE DES USINES
RENAULT
Boîte postale 103 8-10 avenue Emile Zola
F-92109 Boulogne-Billancourt (FR)**

(72) Inventeur : **Liadouze, Alain
18, rue Gabriel Péri
F-78330 Fontenay-Le-Fleury (FR)**
Inventeur : **Beauchel, Jean-Paul
3, rue Linne
F-78500 Sartrouville (FR)**

## Description

La présente demande concerne un pare-chocs du type défini dans le préambule de la revendication 1.

Les pare-chocs montés à l'avant et à l'arrière des véhicules modernes doivent :
- avoir une forme s'intégrant bien à l'esthétique et à l'aérodynamique du véhicule,
- avoir une forme très enveloppante et être généreusement dimentionnés pour assurer une protection suffisante,
- être léger,
- être d'un prix de revient le plus faible possible car ces éléments particulièrement exposés protègent le véhicule par absorbtion de l'énergie du choc en se déformant : ce sont des pièces pouvant être plus ou moins fréquemment remplacées,
- être d'un montage et démontage aisés et rapides.

Le but de l'invention est de réaliser un pare-chocs monobloc en matériau plastique, comme le polypropylène, et possédant des lames servant de liaison d'une façon simple et peu coûteuse avec la structure du véhicule.

Dans ce but, l'invention propose une solution caractérisée comme dans la revendication 1.

Selon l'invention, l'accès aux moyens de fixation du pare-chocs sur la structure du véhicule se fait par en dessous.

Les dessins annexés illustrent l'invention.
- La figure 1 représente une vue en perspective du pare-chocs,
- La figure 2 représente une vue suivant F2 de la figure 1,
- La figure 3 représente une section 3-3 de la figure 2,
- La figure 4 représente une section 4-4 de la figure 2.

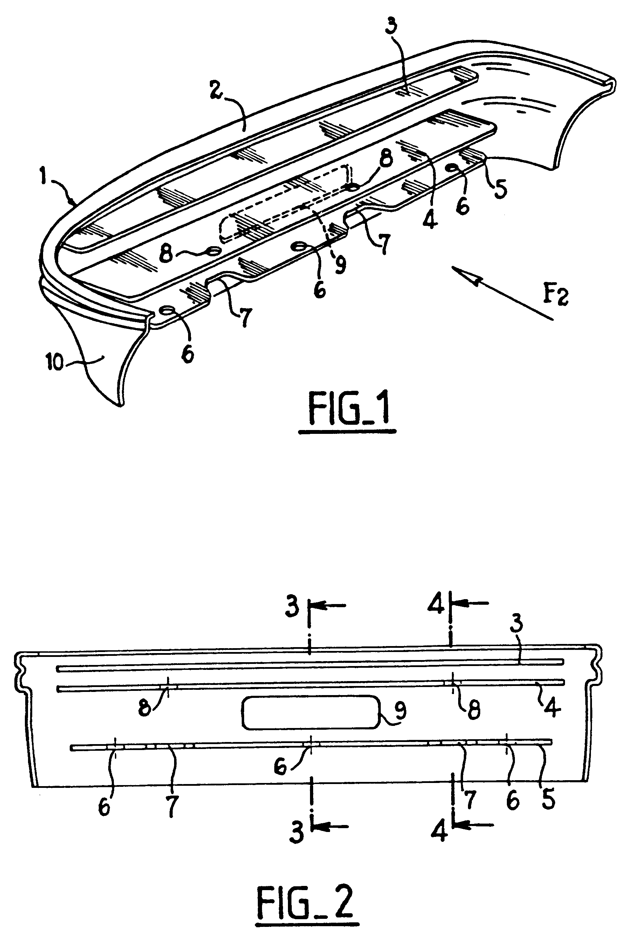

 - Sur la figure 1, qui représente une vue en perspective, l'observateur étant placé à l'intérieur du pare-chocs, on voit les lames supérieure 3, médiane 4 et inférieure 5 parallèles à la partie supérieure 2 du pare-chocs 1. La lame inférieure est munie de trous de fixations 6 et d'encoches 7. Ces encoches sont positionnées en vis à vis des trous de fixation 8 de la lame médiane 4. On voit que les encoches 7 sont dimentionnées de façon à permettre le passage de l'outil de fixation au niveau des trous 8. Un ajour 9 est aménagé dans la partie inférieure et sensiblement verticale du pare-chocs 10.
 - La figure 2 représente une vue suivant F2. On y voit plus précisément la position des lames supérieure 3, médiane 4 et inférieure 5, les trous de fixation 6 sur la lame inférieure 5, les trous de fixation 8 sur la lame médiane 4, les encoches 7 sur la lame inférieure 5 et l'ajour 9 dans la partie inférieure et sensiblement verticale 10 du pare-chocs.

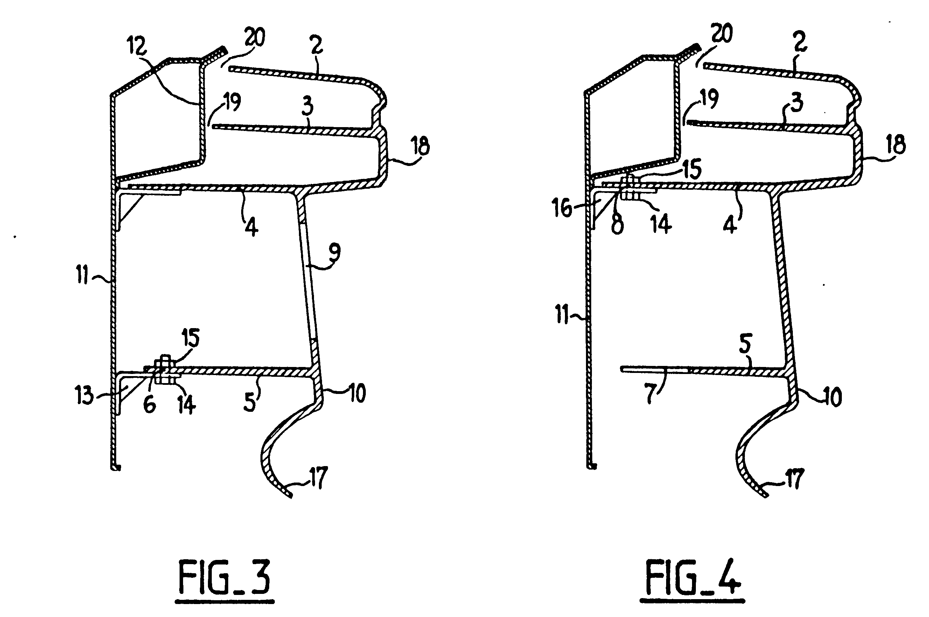

 - La figure 3 qui est une section 3 -3 de la figure 2, illustre la fixation du pare-chocs sur la voiture. La structure de la voiture sur laquelle est fixé le pare-chocs 1 est constituée d'une jupe 11 renforcée dans sa partie supérieure par une tôle 12 formant un caisson. La lame inférieure 5 est fixée par un moyen connu comme des vis 14 et des écrous 15 par les trous 6 sur des équerres fusibles 13 solidaires de la jupe 11. Un ajour 9, aménagé dans la partie verticale du pare-chocs, permet un accès supplémentaire à l'intérieur de celui-ci pour faciliter le montage.
 - De la même façon, la section 4-4 de la figure 2, illustre la fixation du pare-chocs sur la voiture. La lame médiane est fixée par un moyen connu comme des vis 14 et des écrous 15 par les trous 8 sur des équerres fusibles 16 solidaires de la jupe 11. On peut voir l'utilité des encoches 7 aménagées sur la lame inférieure 5 ; celles-ci permettent l'accès au système de fixation 14 et 15 de la lame médiane 4 par le dessous du véhicule.

On peut voir que la partie inférieure du pare-chocs constituée d'une partie sensiblement verticale 10 terminée par un becquet 17 et fixée de la manière décrite précédemment sur la jupe 11, offre une relative souplesse en cas de choc. La partie supérieure, en forme de traverse rigidifiée par la partie supérieure 2, la lame supérieure 3 et la lame médiane 4 n'est pas directement fixée sur la structure de la voiture.

En cas de choc sur la partie frontale 18 de cette traverse, la lame supérieure 3 vient en contact avec la traverse 12. Passé un certain seuil d'effort, la lame supérieure 3 se déforme en absorbant une certaine quantité d'énergie et la partie supérieure 2 vient heurter la traverse 12. Le jeu 19, entre la lame supérieure 3 et le caisson 12, étant inférieur au jeu 20 séparant la partie supérieure 2 du pare-chocs et le caisson 12 permet ce type de contact progressif lorsque l'effort augmente. La traverse médiane 4 et la traverse inférieure 5 se déforment à leur tour puis les équerres de fixation 13 et 16 se déforment.

Ce type de pare-chocs simple et monobloc, dont la fixation est simplifiée, permet d'obtenir un amortissement bien contrôlé sous un choc tel que celui prévu au cahier des charges du constructeur.

## Revendications

1. Pare-chocs destiné à être fixé avec la carrosserie de véhicules automobiles, comprenant une partie externe en forme de coque (1) avec des retours venant protéger les parties latérales de la carrosserie et possédant des lames (3, 4, 5) disposées parallèment entre elles, et parallèlement à la partie supérieure (2) du pare-chocs, et comprenant aussi une partie inférieure (10) caractérisé en ce que les lames susdites sont trois et que les deux lames inférieures (4 et 5) possèdent des moyens de fixation avec la carrosserie.

2. Pare-chocs selon la revendication 1, caractérisé en ce que la partie supérieure (2) du pare-chocs forme avec les deux première lames supérieures (3, 4) une traverse (18) rigidifiée et que la partie inférieure (10) est une jupe sensiblement verticale prolongée par un becquet (17) et rigidifiée par la dernière lame inférieure (5) parallèle aux autres lames.

3. Pare-chocs selon la revendication 2, caractérisé en ce que la profondeur de la partie supérieure (2) et de la première lame supérieure (3) est différente et réglée de façon à venir en appui l'une après l'autre (lors d'un choc provoquant le recul du pare-chocs) sur la structure de la voiture qui est localement en forme de caisson (12).

4. Pare-chocs selon la revendication 1, caractérisé en ce que les deux lames inférieures (4, 5) sont fixées par des moyens connus, comme des vis et des écrous sur des équerres (13, 16) appartenant à la structure de la carrosserie (11).

5. Pare-chocs selon la revendication 4, caractérisé en ce que les équerres (13, 16) appartenant à la structure de la carrosserie (11) sont fusibles en cas de choc.

6. Pare-chocs selon la revendication 1, caractérisé en ce que la lame inférieure (5) possède des encoches (7) permettant d'accéder aux fixations (14, 15) de la lame (4) qui lui est supérieure.

7. Pare-chocs selon la revendication 2, caractérisé en ce que la partie inférieure sensiblement verticale (10) est munie d'un ajour (9).

## Patentansprüche

1. Stoßstange zur Anbringung an der Karosserie von Kraftfahrzeugen, mit einem schalenförmigen äußeren Abschnitt (1), der Flanken aufweist zum Schutz der Seitenteile der Karosserie und die Flachteile (3, 4, 5) aufweist, die sowohl parallel zueinander als auch parallel zum oberen Teil (2) der Stoßstange angeordnet sind und mit einem unteren Abschnitt (10), dadurch gekennzeichnet, daß die unteren Flachteile (4, 5) eine Anordnung zur Befestigung an der Karosserie aufweisen.

2. Stoßstange nach Anspruch 1, dadurch gekennzeichnet, daß der obere Teil (2) der Stoßstange mit den beiden ersten oberen Flachteilen (3, 4) eine versteifte Querstrebe (18) bildet und daß der untere Abschnitt (10) eine im wesentlichen senkrecht Schürze bildet, die durch einen Spoiler (17) verlängert ist und durch das letzte untere, parallel zu den anderen Flachteilen angeordnete Flachteil (5) versteift ist.

3. Stoßstange nach Anspruch 2, dadurch gekennzeichnet, daß die Tiefen des oberen Teils (2) und des ersten oberen Flachteils (3) unterschiedlich sind und derart eingestellt sind, daß sie sich (im Falle eines die Einbuchtung der Stoßstange bewirkenden Stoßes) nacheinander auf dem Kraftfahrzeugaufbau abstützen, der örtlich Kassettenform (12) aufweist.

4. Stoßstange nach Anspruch 2, dadurch gekennzeichnet, daß die beiden unteren Flachteile (4 und 5) durch eine bekannte Anordnung, wie z.B. Muttern und Schrauben, an Winkeln (13, 16) befestigt sind, welche zum Aufbau der Karosserie (11) gehören.

5. Stoßstange nach Anspruch 4, dadurch gekennzeichnet, daß die zum Aufbau der Karosserie (11) gehörenden Winkel (13, 16) im Falle eines Stoßes verformbar sind.

6. Stoßstange nach Anspruch 1, dadurch gekennzeichnet, daß das untere Flachteil (5) Aussparungen (7) aufweist, die den Zugang zu den Befestigungen (14, 15) des darüber angeordneten Flachteils (4) ermöglichen.

7. Stoßstange nach Anspruch 2, dadurch gekennzeichnet, daß der untere im wesentlichen senkrechte Abschnitt (10) mit einer Öffnung (9) versehen ist.

## Claims

1. A bumper which is intended to be fixed to the body of motor vehicles, comprising an external portion (1) in the form of a shell with return portions for protecting the side parts of the body and having plate portions (3, 4, 5) which are disposed parallel to each other and parallel to the lower portion (2) of the bumper, and also comprising a lower portion (10), characterised in that there are three said plate portions and that the lower two plate portions (4 and 5) have means for fixing to the body.

2. A bumper according to claim 1 characterised in that the upper portion (2) of the bumper forms with the first two upper plate portions (3, 4) a rigidified transverse portion (18) and that the lower portion (10) is a substantially vertical skirt which is extended by a lip portion (17) and rigidified by the last lower plate portion (5) which is parallel to the other plate portions.

3. A bumper according to claim 2 characterised in that the depth of the upper portion (2) and the first upper plate portion (3) is different and regulated in such a way as to come into contact in succession (upon an impact causing the bumper to move back) against the structure of the car which is locally in the form of a box structure (12).

4. A bumper according to claim 1 characterised in that the two lower plate portions (4, 5) are fixed by known means such as screws and nuts to right-angle brackets (13, 16) which belong to the structure of the body (11).

5. A bumper according to claim 4 characterised in that the right-angle brackets (13, 16) which belong to the structure of the body (11) are fusible in the event of impact.

6. A bumper according to claim 1 characterised in that the lower plate portion (5) has notches (7) permitting access to the fixings (14, 15) of the plate portion (4) which is above it.

7. A bumper according to claim 2 characterised in that the lower substantially vertical portion (10) is provided with an opening (9).

## FIG_1

## FIG_2

FIG_3

FIG_4

EP 0 346 190 B1